# EUROPÄISCHE PATENTSCHRIFT

(11) **EP 1 669 783 B1**
(45) Veröffentlichungstag und Bekanntmachung des Hinweises auf die Patenterteilung: **27.05.2009**
(21) Anmeldenummer: 05026173.4
(22) Anmeldetag: 01.12.2005
(51) Int. Cl.: G02B 6/44

(54) **Lichtwellenleiter-Übertragungskabel**
Fibre optic transmission cable
Câble de transmission à guide optique

(30) Priorität: 31.08.2005 DE 202005013816 U; 11.12.2004 DE 202004019182 U
(43) Veröffentlichungstag der Anmeldung: 14.06.2006
(73) Patentinhaber: Autoflug Steuerungs- und SensorTechnik GmbH, 73230 Kirchheim unter Teck (DE)
(72) Erfinder: Bohacek, Radomir, 73230 Kirchheim/Teck (DE); Elmar, Albert, Dr., 73272 Neidlingen (DE)
(74) Vertreter: Müller, Karl-Ernst

(56) Entgegenhaltungen:
- FR-A- 2 559 592
- US-A- 5 119 457
- US-A- 6 157 761
- PATENT ABSTRACTS OF JAPAN Bd. 2003, Nr. 07, 3. Juli 2003 (2003-07-03) -& JP 2003 075693 A (UBE NITTO KASEI CO LTD), 12. März 2003 (2003-03-12)
- PATENT ABSTRACTS OF JAPAN Bd. 2002, Nr. 12, 12. Dezember 2002 (2002-12-12) -& JP 2002 231072 A (YAZAKI CORP), 16. August 2002 (2002-08-16)

## Beschreibung

Die Erfindung betrifft Übertragungskabel für die Signal- und/oder Datenübermittlung zwischen zwei Stationen, von denen wenigstens eine Station bewegbar ist, mit einem der Übertragung der Signale und/oder Daten dienenden Lichtwellenleiter sowie mit einer Anordnung von parallel zum Lichtwellenleiter verlaufenden, flexiblen Zugentlastungsorganen und mit einem äußeren Kabelmantel.

Ein derartiges Übertragungskabel ist durch Benutzung bekannt, wobei dessen Anwendungsbereich beispielsweise in der Steuerung von sich relativ zu einer anderen Station bewegenden Gegenständen wie Land-, See- oder Luftfahrzeugen beziehungsweise sonstigen Flugkörpern wie Raketen oder dergleichen besteht. Hierbei müssen von der festen Station optische Signale zu dem sich bewegenden Gegenstand übertragen werden, wobei ein auf der Basis eines Lichtwellenleiters aufgebautes Übertragungskabel zum Einsatz kommt. Dieses Übertragungskabel ist in der Regel auf einem Spulenkörper aufgewickelt, wobei die aus dem auf dem Spulenkörper und dem darauf aufgewickelten Übertragungskabel bestehende Spuleneinheit vorzugsweise von dem sich bewegenden Gegenstand mitgeführt wird. Soweit das freie Ende des Übertragungskabels an der anderen Station vorzugsweise im Startbereich des sich bewegenden Gegenstandes befestigt ist, wickelt sich das Übertragungskabel als Folge des mit der Fortbewegung des Gegenstandes anwachsenden Abstandes von der anderen Station von der Spuleneinheit ab. Bei der jeweils anderen Station kann es sich um eine ortsfeste Station oder um eine selbst bewegliche Station handeln; so kann die Steuerung des sich bewegenden Gegenstandes auch von einer fahrbaren Station wie einem LKW oder einem Schiff aus erfolgen.

Soweit im Rahmen eines derartigen Einsatzes das Übertragungskabel einer entsprechenden Zugbelastung unterliegt, ist bei den durch Benutzung bekannt gewordenen Übertragungskabeln die Anordnung von parallel zum Lichtwellenleiter in dem Übertragungskabel verlaufenden Zugentlastungsorganen bekannt, die in einen den Lichtwellenleiter umschließenden, vorzugsweise aus einem auf den Lichtwellenleiter aufextrudierten Kunststoff bestehenden Kabelmantel eingebettet sind. Der Lichtwellenleiter selbst besteht dabei in an sich bekannter Weise aus dem Glaskörper und einem Kunststoff-Überzug, dem sogenannten Coating, welches dem Schutz des Glaskörpers vor physikalischen und chemischen Einflüssen dient und das Microbending, dass heißt die Dämpfung des durch den Lichtwellen-leiter hindurchgehenden Lichtes in Folge partieller Drücke auf den Lichtwellenleiter mindert. Der Kunststoffüberzug kann dabei aus einer Schicht oder auch mehreren Schichten gegebenenfalls verschiedener Kunststoffarten bestehen, wobei es sich in der Regel um vergleichsweise weiche Kunststoffarten handelt.

Ein solchermaßen aufgebautes Übertragungskabel mit in einem in den Kabelaufbau integrierten Kunststoffmantel eingebetteten Zugentlastungsorgangen ist aus der FR-A-2 559 592 bekannt. Hierbei ist zum Schutz des Kunststoffmantels auf diesen eine aus einem textilen Material bestehende äußere Hülle aufgewickelt. Bei dem aus der US-A-5 119 457 bekannten Kabel sind auch als Lichtwellenleiter ausgebildete Leiter gemeinsam mit Zugentlastungsorganen mit einer Bandage umwickelt und dadurch zusammengehalten, wobei als äußerer Kabelmantel eine Ummantelung aus Neopren aufgebracht ist. In der Patent Abstract of Japan Bd 2003, Nr. 07, 3. Juli 2003 - JP 2003075693 A ist ein Übertragungskabel beschrieben, bei dem der innere Lichtwellenleiter von Zugentlastungsorganen umgeben und außen eine aus einer Kunststoffmatrix mit unterschiedlichen Schmelzpunkten bestehende Ummantelung aufgebracht ist, die ihrerseits durch textile Zugentlastungen verstärkt ist.

Mit dem Aufbau eines bekannten Übertragungskabels ist der Nachteil verbunden, dass der zum Schutz des Lichtwellenleiters einschließlich dessen Coating noch aufgebrachte extrudierte Kabelmantel den Durchmesser eines derartigen Übertragungskabels vergrößert, wodurch gleichzeitig dessen Flexibilität verringert wird. Der Nachteil führt somit zu relativ groß bauenden Spuleneinheiten, die von den sich bewegenden Gegenständen mitzuführen sind. Außerdem ist die Herstellung des Kabelmantels im Extrusionsverfahren unter gleichzeitiger Einbettung der Zugentlastungsorgane in den Kabelmantel aufwendig.

Aus der Patent Abstract of Japan Bd. 2002, Nr. 12 - JP 2002231072 A ist schließlich ein Kabel bekannt, bei dem der innere Lichtwellenleiter vollständig von parallel zu ihm verlaufenden Metalldrähten umgeben ist, die durch eine darauf gewickelte Außenhülle zusammengehalten sind. Ein derartiges Kabel weist eine hohe Biegesteifigkeit auf.

Der Erfindung liegt daher die Aufgabe zugrunde, ein Übertragungskabel der eingangs genannten Art so auszubilden, dass unter Einhaltung der erforderlichen Zugfestigkeit der Aufbau des Übertragungskabels vereinfacht und dessen Flexibilität verbessert ist, wobei gleichzeitig Dämpfungsspikes beim Abwickeln des Kabels von einer Spuleneinheit reduziert sein sollen.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, daß das Übertragungskabel aus dem Lichtwellenleiter, den den Lichtwellenleiter unmittelbar einhüllenden, in Form von Aramidgarnen und/oder anderen Filamenten und/oder Glasfilamenten vorliegenden Zugentlastungsorganen und einer das aus Lichtwellenleiter und Zugentlastungsorganen bestehende Bündel umschließenden, aus einem textilen Material hergestellten und den äußeren Kabelmantel des Übertragungskabels bildenden äußeren Bandage besteht, und daß in dem aus Lichtwellenleiter und Zugentlastungsorganen bestehenden Bündel ein parallel zum Lichtwellenleiter verlaufender Strang aus einem biegesteifen Draht angeordnet ist. Mit der Erfindung ist der Vorteil verbunden, dass zunächst der Durchmesser des Übertragungskabels wegen eines fehlenden gesonderten Kunststoffmantels deutlich geringer gehalten werden kann; dabei wird die lediglich aus einem textilen Material hergestellte äußere Bandage fertigungstechnisch so realisiert, dass die Dämpfung des Lichtsignals kaum beeinträchtigt wird, wobei durch die Dichte der aufgebrachten Bandage weiterhin die Flexibilität des Übertragungskabels variiert werden kann. Da sich der Lichtwellenleiter zwischen den ihn einhüllende, aus Aramidgarnen und/oder anderen Filamenten und/oder Glasfilamenten bestehenden Zugentlastungsorganen bewegen kann, kann der Lichtwellenleiter bei Biegungen des Übertragungskabels den Biegekräften leichter ausweichen. Außerdem ergibt sich beim Aufwickeln des Übertragungskabels auf einem Spulenkörper keine merkliche Erhöhung der Dämpfung des durch den Lichtwellenleiter übertragenen Lichtsignals. Es kommt in vorteilhafter Weise hinzu, dass während des Herstellungsprozesses des Übertragungskabels durch einfaches Hinzufügen weiterer Filamente beziehungsweise Fäden als zusätzliche Zugentlastungsorgane die Zugfestigkeit des Übertragungskabels erhöht werden kann. Dieses Vorgehen ist auch während des Aufbringens der das aus Lichtwellenleiter und Zugentlastungsorganen bestehende Bündel umschließenden Bandage noch möglich, so dass nach einem Ausführungsbeispiel der Erfindung das Übertragungskabel während seines Herstellungsprozesses partiell beziehungsweise abschnittsweise ohne größere Produktionsprobleme verstärkt werden kann.

Da das Übertragungskabel sowohl aufgrund seiner Aufwicklung auf der Spuleneinheit als auch während des als dynamischer Vorgang ablaufenden Abwickelns von der Spuleneinheit entsprechenden Biegungen ausgesetzt ist, die bezüglich des Lichtwellenleiters zu Dämpfungseinbrüchen, sogenannten Dämpfungsspikes, führen können, ist zur Vermeidung von derartigen Erscheinungen vorgesehen, dass in dem aus Lichtwellenleiter und Zugentlastungsorganen bestehenden Bündel ein parallel zum Lichtwellenleiter verlaufender Strang aus einem biegesteifen Draht angeordnet ist. Der biegesteife Strang minimiert oder verhindert somit Biegungen des Lichtwellenleiters und damit unerwünscht hohe Dämpfungsspikes. Dabei werden die Dämpfungsspikes sowohl ihrer Anzahl als auch ihrem Ausmaß nach minimiert, so dass allenfalls eine geringe Abschwächung des über den Lichtwellenleiter übertragenen Signals eintritt.

Nach einem Ausführungsbeispiel der Erfindung ist der biegesteife Strang aus einem Draht gebildet, vorzugsweise aus einem Federstahldraht, der nach einem Ausführungsbeispiel der Erfindung einen Durchmesser von 0,06mm bis 0,5mm aufweisen kann. Anstelle des angesprochenen Federstahldrahtes können auch Drähte aus anderen Materialien, Kunststoffdrähte oder entsprechend geeignete Materialstränge verwendet werden.

Hinsichtlich des zur Herstellung der Bandage verwendeten textilen Materials kann nach Ausführungsbeispielen der Erfindung vorgesehen sein, dass das textile Material ein fadenartiges oder bändchenartiges natürliches Material wie beispielsweise Seide oder auch ein fadenartiger oder bändchenartiger Kunststoff einer geeigneten Ausführung ist.

Die Bandage ist nach alternativen Ausführungsbeispielen der Erfindung durch Umwickeln, Umspinnen oder Umflechten des aus Lichtwellenleiter und Zugentlastungsorgan bestehenden Bündels herstellbar.

Nach einem Ausführungsbeispiel weist die Bandage über die Länge des Übertragungskabels eine gleichmäßige Ausbildung auf, wobei in einer weiteren Ausführungsform die Bandage über die Länge des Übertragungskabels auch abschnittsweise Verstärkungen aufweisen kann.

Nach alternativen Ausführungsbeispielen kann die Bandage einschichtig oder auch mehrschichtig ausgebildet sein.

In der Zeichnung sind Ausführungsbeispiele der Erfindung sowie Beispiele anderer Kabel wiedergegeben, welche nachstehend beschrieben sind. Es zeigen:
- Fig. 1: den Aufbau eines Lichtwellenleiters als Kern des Übertragungskabels in einer schematischen Schnittdarstellung,
- Fig. 2: den Aufbau eines typischen Übertragungskabels mit Lichtwellenleiter, Zugentlastungsorganen und einer die Außenhülle bildenden Bandage in einer schematischen Seitenansicht,
- Fig. 3: eine Spuleneinheit mit darauf aufgewickeltem Übertragungskabel in einer schematischen Seitenansicht,
- Fig. 4: den Gegenstand der Figur 3 in einem anderen Ausführungsbeispiel,
- Fig. 5: den Aufbau des erfindungsgemäßen Übertragungskabels einschließlich eines integrierten Strangs aus einem biegesteifen Material.

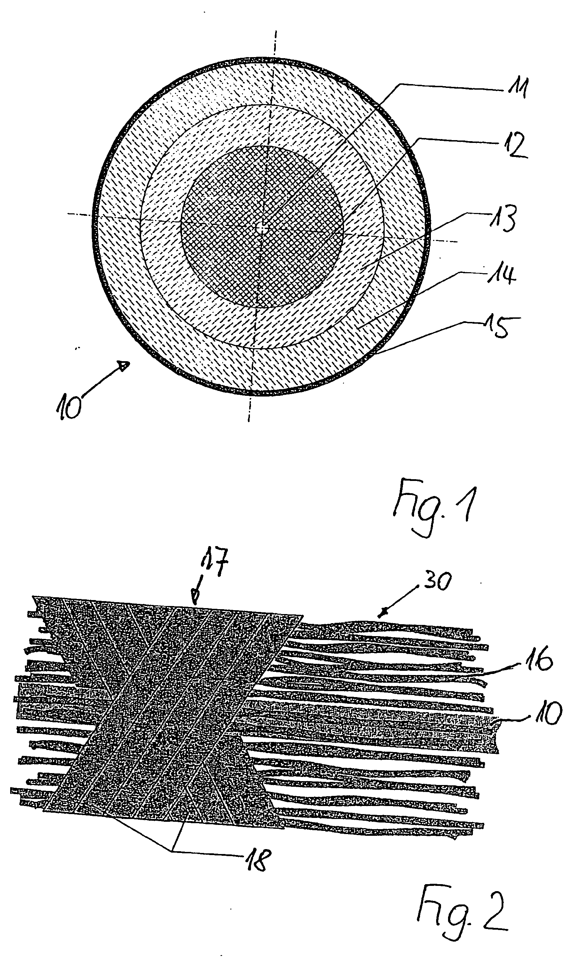

In Figur 1 ist zunächst ein an sich bekannter Lichtwellenleiter 10 dargestellt mit einem Glasfaserkern 11, einem Mantel 12 und einem zweischichtigen, aus einem inneren Kunststoffüberzug 13 und einem äußeren Kunststoffüberzug 14 bestehenden "Coating", auf dessen Außenseite noch eine Farbschicht 15 zur Kennzeichnung des Lichtwellenleiters angebracht ist.

Wie sich aus Figur 2 mit einer Darstellung des Aufbaus des Übertragungskabels 30 ergibt, sind in einer unmittelbaren Einhüllung des zentral im Querschnitt des Übertragungskabels 30 angeordneten Lichtwellenleiters 10 eine Vielzahl von Zugentlastungsorganen 16 angeordnet, die beispielsweise in Form von Aramidgarnen und/oder anderen Filamenten und/oder Glasfilamenten vorliegen können. Das aus dem Lichtwellenleiter und den diesen umgebenden Zugentlastungsorganen bestehende Bündel ist von einer Bandage 17 umschlossen, die insoweit eine Außenhülle zum Schutz des Lichtwellenleiters 10 bildet. Die Bandage 17 besteht bei dem dargestellten Ausführungsbeispiel aus einzelnen, aus Seide als einem natürlichen textilen Material bestehenden Bändern 18, die in einer doppellagigen Anordnung in unterschiedlicher Schlagrichtung der beiden Lagen um das Bündel gewickelt sind. Insofern besteht das aus Figur 2 ersichtliche Übertragungskabel 30 lediglich aus drei unterschiedlich miteinander zu verbindenden Bestandteilen, die in einer einfachen Weise zusammen fügbar sind.

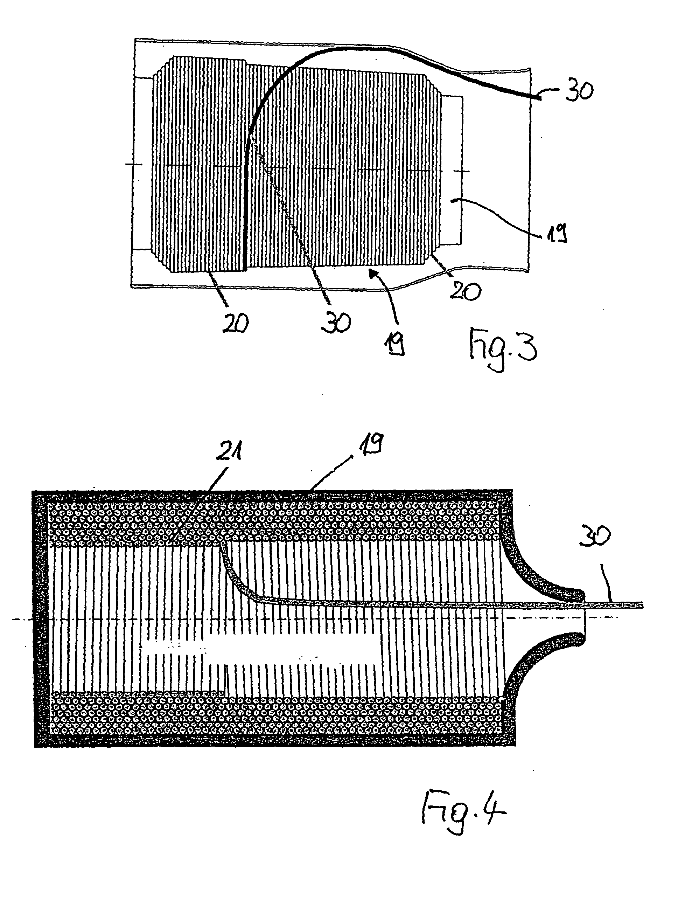

Ein derartiges Übertragungskabel 30 wird in seinem praktischen Einsatz beispielsweise auf die Außenseite eines Spulenkörpers 19 aufgewickelt, wie sich dies schematisch aus Figur 3 ergibt. Das als Außenwicklung 20 aufgebrachte Übertragungskabel 30 ist von dem Spulenkörper 19 entsprechend abwickelbar.

Einer aus Spulenkörper 19 und Übertragungskabel 30 bestehenden Spuleneinheit ergibt sich aus Figur 4, bei der der Spulenkörper 19 das mit einer Innenwicklung 21 im Inneren des Spulenkörpers 19 untergebrachte Übertragungskabel 30 umschließt. Insofern ist das Übertragungskabel 30 aus dem Inneren des Spulenkörpers abziehbar.

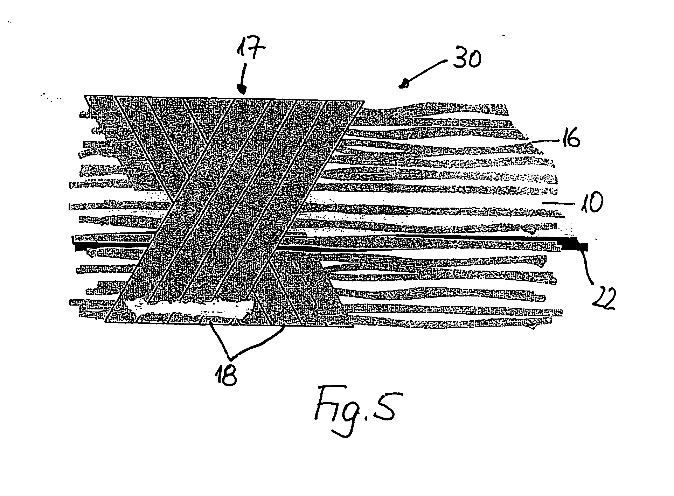

Soweit es zur Vermeidung beziehungsweise Verminderung von durch Biegungen des Lichtwellenleiters 10 hervorgerufenen Dämpfungsspikes zweckmäßig ist, parallel zum Lichtwellenleiter 10 in dem Übertragungskabel 30 einen Strang aus einem biegesteifen Material zu integrieren, ist in Figur 5 ein entsprechender Aufbau des Übertragungskabels 30 dargestellt, wobei die einzelnen, in Figur 2 dargestellten und beschriebenen Bestandteile des Übertragungskabels 30 - Lichtwellenleiter 10, Zugentlastungsorgane 16, Bandage 17 mit Bändern 18 - unverändert sind. Parallel zum Lichtwellenleiter 10 ist ein Strang 22 aus einem biegesteifen Material über die Länge des Übertragungskabels 30 verlaufend angeordnet, wobei dieser Strang 22 nach einem Ausführungsbeispiel der Erfindung aus einem nicht rostenden Federstahldraht mit einem Durchmesser von 0,1mm besteht.

Die in der vorstehenden Beschreibung, den Schutzansprüchen und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Übertragungskabel (30) für die Signal- und/oder Datenübermittlung zwischen zwei Stationen, von denen wenigstens eine Station bewegbar ist, mit einem der Übertragung der Signale und/oder Daten dienenden Lichtwellenleiter (10) sowie mit einer Anordnung von parallel zum Lichtwellenleiter (10) verlaufenden Zugentlastungsorganen (16) und mit einem äußeren Kabelmantel, wobei das Übertragungskabel (30) aus dem Lichtwellenleiter (10), den den Lichtwellenleiter (10) unmittelbar einhüllenden, in Form von Aramidgarnen und/oder anderen Filamenten und/oder Glasfilamenten vorliegenden Zugentlastungsorganen (16) und einer das aus Lichtwellenleiter (10) und Zugentlastungsorganen (16) bestehende Bündel umschließenden, aus einem textilen Material hergestellten und den äußeren Kabelmantel des Übertragungskabels (30) bildenden äußeren Bandage (17) besteht, und wobei in dem aus Lichtwellenleiter (10) und Zugentlastungsorganen (16) bestehenden Bündel ein parallel zum Lichtwellenleiter (10) verlaufender Strang (22) aus einem biegesteifen Draht angeordnet ist.

2. Übertragungskabel nach Anspruch 1, **dadurch gekennzeichnet, dass** der biegesteife Strang (22) aus einem Federstahldraht besteht.

3. Übertragungskabel nach Anspruch 2, **dadurch gekennzeichnet, dass** der Federstahldraht einen Durchmesser von 0,06 mm bis 0,5mm aufweist.

4. Übertragungskabel nach einem der Ansprüche 1 bis 3, **dadurch gekennzeichnet, dass** das textile Material ein fadenartiges oder bändchenartiges natürliches Material ist.

5. Übertragungskabel nach Anspruch 4, **dadurch gekennzeichnet, dass** das textile Material Seide ist.

6. Übertragungskabel nach einem der Ansprüche 1 bis 5, **dadurch gekennzeichnet, dass** das textile Material ein fadenartiger oder bändchenartiger Kunststoff ist.

7. Übertragungskabel nach einem der Ansprüche 1 bis 6, **dadurch gekennzeichnet, dass** die Bandage (17) durch Umwickeln des Bündels hergestellt ist.

8. Übertragungskabel nach einem der Ansprüche 1 bis 6, **dadurch gekennzeichnet, dass** die Bandage (17) durch Umspinnen des Bündels hergestellt ist.

9. Übertragungskabel nach einem der Ansprüche 1 bis 8, **dadurch gekennzeichnet, dass** die Bandage (17) durch Umflechtung des Bündels hergestellt ist.

10. Übertragungskabel nach einem der Ansprüche 1 bis 9, **dadurch gekennzeichnet, dass** die Bandage (17) über die Länge des Übertragungskabels eine gleichmäßige Ausbildung aufweist.

11. Übertragungskabel nach einem der Ansprüche 1 bis 9, **dadurch gekennzeichnet, dass** die Bandage (17) über die Länge des Übertragungskabels abschnittsweise Verstärkungen aufweist.

12. Übertragungskabel nach einem der Ansprüche 1 bis 11, **dadurch gekennzeichnet, dass** die Bandage (17) einschichtig ausgebildet ist.

13. Übertragungskabel nach einem der Ansprüche 1 bis 11, **dadurch gekennzeichnet, dass** die Bandage (17) mehrschichtig ausgebildet ist.

14. Übertragungskabel nach einem der Ansprüche 1 bis 13, **dadurch gekennzeichnet, dass** sich die Zugentlastungsorgane (16) gleichmäßig über die Länge des Übertragungskabels erstrecken.

15. Übertragungskabel nach einem der Ansprüche 1 bis 13, **dadurch gekennzeichnet, dass** über die Länge des Übertragungskabels abschnittsweise eine größere Anzahl von Zugentlastungsorganen (16) eingebracht ist.

## Claims

1. Transmission cable (30) for signal and/or data transmission between two stations, at least one of which is displaceable, comprising an optical waveguide (10) which acts to transmit signals and/or data, an arrangement of strain relief elements (16), which extend parallel to the optical waveguide (10), and an outer cable sheath, wherein the transmission cable (30) consists of the optical waveguide (10), the strain relief elements (16), which directly enclose the optical waveguide (10) and are in the form of aramid fibres and/or other filaments and/or glass filaments, and an outer binding (17) which encloses the bundle formed from the optical waveguide (10) and the strain relief elements (16), is produced from a textile material and forms the outer cable sheath of the transmission cable (30), and wherein a strand (22) made of a bend-resistant wire and extending parallel to the optical waveguide (10) is arranged in the bundle formed from the optical waveguide (10) and the strain relief elements (16).

2. Transmission cable according to claim 1, **characterised in that** the bend-resistant strand (22) is made of a spring steel wire.

3. Transmission cable according to claim 2, **characterised in that** the spring steel wire has a diameter of 0.06 mm to 0.5 mm.

4. Transmission cable according to any one of claims 1 to 3, **characterised in that** the textile material is a fibre-like or band-like natural material.

5. Transmission cable according to claim 4, **characterised in that** the textile material is silk.

6. Transmission cable according to any one of claims 1 to 5, **characterised in that** the textile material is a fibre-like or band-like plastics material.

7. Transmission cable according to any one of claims 1 to 6, **characterised in that** the binding (17) is produced by winding round the bundle.

8. Transmission cable according to any one of claims 1 to 6, **characterised in that** the binding (17) is produced by braiding round the bundle.

9. Transmission cable according to any one of claims 1 to 8, **characterised in that** the binding (17) is produced by plaiting round the bundle.

10. Transmission cable according to any one of claims 1 to 9, **characterised in that** the binding (17) is formed uniformly over the length of the transmission cable.

11. Transmission cable according to any one of claims 1 to 9, **characterised in that** the binding (17) is reinforced in portions over the length of the transmission cable

12. Transmission cable according to any one of claims 1 to 11, **characterised in that** the binding (17) is formed so as to be a single layer.

13. Transmission cable according to any one of claims 1 to 11, **characterised in that** the binding (17) is formed so as to have a plurality of layers.

14. Transmission cable according to any one of claims 1 to 13, **characterised in that** the strain relief elements (16) extend uniformly over the length of the transmission cable.

15. Transmission cable according to any one of claims 1 to 13, **characterised in that** a greater number of strain relief elements (16) are introduced in portions over the length of the transmission cable.

## Revendications

1. Câble de transmission (30) pour la transmission de signaux et/ou de données entre deux stations, dont au moins une station est mobile, avec un conducteur optique (10) servant à la transmission des signaux et/ou données ainsi qu'avec un système d'organes de décharge de traction (16) s'étendant parallèlement au conducteur optique (10) et avec une gaine extérieure de câble, dans lequel le câble de transmission (30) est constitué du conducteur optique (10), des organes de décharge de traction (16) enveloppant directement le conducteur optique (10) et présents sous la forme de fils d'aramide et/ou d'autres filaments et/ou filaments de verre, ainsi que d'un bandage extérieur (17) entourant le faisceau constitué du conducteur optique (10) et des organes de décharge de traction (16), fabriqué à partir d'un matériau textile et formant la gaine extérieure du câble de transmission (30), et dans lequel un brin (22) constitué d'un fil rigide en flexion et s'étendant parallèlement au conducteur optique (10) est placé dans le faisceau constitué du conducteur optique (10) et des organes de décharge de traction (16).

2. Câble de transmission selon la revendication 1, **caractérisé en ce que** le brin (22) rigide en flexion est composé d'un fil en acier à ressort.

3. Câble de transmission selon la revendication 2, **caractérisé en ce que** le fil en acier à ressort présente un diamètre de 0,06 mm à 0,5 mm.

4. Câble de transmission selon l'une des revendications 1 à 3, **caractérisé en ce que** le matériau textile est un matériau naturel de type fil ou bandelette.

5. Câble de transmission selon la revendication 4, **caractérisé en ce que** le matériau textile est de la soie.

6. Câble de transmission selon l'une des revendications 1 à 5, **caractérisé en ce que** le matériau textile est une matière plastique de type fil ou bandelette.

7. Câble de transmission selon l'une des revendications 1 à 6, **caractérisé en ce que** le bandage (17) est réalisé par enrubannage du faisceau.

8. Câble de transmission selon l'une des revendications 1 à 6, **caractérisé en ce que** le bandage (17) est réalisé par guipage du faisceau.

9. Câble de transmission selon l'une des revendications 1 à 8, **caractérisé en ce que** le bandage (17) est réalisé par tressage du faisceau.

10. Câble de transmission selon l'une des revendications 1 à 9, **caractérisé en ce que** le bandage (17) présente une configuration régulière sur la longueur du câble de transmission.

11. Câble de transmission selon l'une des revendications 1 à 9, **caractérisé en ce que** le bandage (17) présente par sections des renforcements sur la longueur du câble de transmission.

12. Câble de transmission selon l'une des revendications 1 à 11, **caractérisé en ce que** le bandage (17) est réalisé monocouche.

13. Câble de transmission selon l'une des revendications 1 à 11, **caractérisé en ce que** le bandage (17) est réalisé multicouches.

14. Câble de transmission selon l'une des revendications 1 à 13, **caractérisé en ce que** les organes de décharge de traction (16) s'étendent régulièrement sur la longueur du câble de transmission.

15. Câble de transmission selon l'une des revendications 1 à 13, **caractérisé en ce que,** sur la longueur du câble de transmission, un nombre supérieur d'organes de décharge de traction (16) est placé dans certaines sections.
